# EUROPÄISCHE PATENTANMELDUNG

(11) **EP 4 050 750 A1**
(43) Veröffentlichungstag der Anmeldung: **31.08.2022**
(21) Anmeldenummer: 21159606.9
(22) Anmeldetag: 26.02.2021
(51) Int. Cl.: H02J 7/00, B25F 5/00, H02P 3/22

(54) **VORRICHTUNG ZUR VERSORGUNG EINER WERKZEUGMASCHINE MIT ELEKTRISCHER ENERGIE, SOWIE VERWENDUNG EINES LASTWIDERSTANDS ZUR AUFNAHME UND/ODER UMWANDLUNG VON ELEKTRISCHER ENERGIE, SYSTEM UND BETRIEBSVERFAHREN**

(71) Anmelder: Hilti Aktiengesellschaft, 9494 Schaan (LI)
(72) Erfinder: Lacher, Michael, 86830 Schwabmünchen (DE); Ringler, Stefan, 86853 Schwabmühlhausen (DE)
(74) Vertreter: Hilti Aktiengesellschaft Corporate Intellectual Property

(57) **Zusammenfassung**

Die vorliegende Erfindung betrifft eine Vorrichtung zur Versorgung einer Werkzeugmaschine mit elektrischer Energie. Die Vorrichtung weist einen Lastwiderstand zur Aufnahme von elektrischer Energie auf, wobei es sich insbesondere um solche elektrische Energie handeln kann, die entsteht bzw. frei wird, wenn eine Werkzeugmaschine oder ihr Werkzeug abgebremst wird. Darüber hinaus kann die freiwerdende Bremsenergie von dem Lastwiderstand in Wärme umgewandelt werden. In einem zweiten Aspekt betrifft die Erfindung ein System, das eine vorgeschlagene Vorrichtung, sowie eine Werkzeugmaschine umfasst, wobei ein Lastwiderstand der Vorrichtung dazu eingerichtet ist, elektrische Energie aufzunehmen, die bei einem Bremsvorgang der Werkzeugmaschine frei wird. Darüber hinaus kann die freiwerdende Bremsenergie von dem Lastwiderstand in Wärme umgewandelt werden. In weiteren Aspekten betrifft die Erfindung eine Verwendung eines Lastwiderstand zur Aufnahme von solcher bei einem Bremsvorgang einer Werkzeugmaschine freiwerdenden elektrischen Energie bzw. zur Umwandlung der Bremsenergie in Wärmeenergie, sowie ein Betriebsverfahren für ein System, das eine vorgeschlagene Energieversorgungs-Vorrichtung und eine Werkzeugmaschine umfasst.

## Beschreibung

Die vorliegende Erfindung betrifft eine Vorrichtung zur Versorgung einer Werkzeugmaschine mit elektrischer Energie. Die Vorrichtung weist einen Lastwiderstand zur Aufnahme von elektrischer Energie auf, wobei es sich insbesondere um solche elektrische Energie handeln kann, die entsteht bzw. frei wird, wenn eine Werkzeugmaschine oder ihr Werkzeug abgebremst wird. Darüber hinaus kann die freiwerdende Bremsenergie von dem Lastwiderstand in Wärme umgewandelt werden. In einem zweiten Aspekt betrifft die Erfindung ein System, das eine vorgeschlagene Vorrichtung, sowie eine Werkzeugmaschine umfasst, wobei ein Lastwiderstand der Vorrichtung dazu eingerichtet ist, elektrische Energie aufzunehmen, die bei einem Bremsvorgang der Werkzeugmaschine frei wird. Darüber hinaus kann die freiwerdende Bremsenergie von dem Lastwiderstand in Wärme umgewandelt werden. In weiteren Aspekten betrifft die Erfindung eine Verwendung eines Lastwiderstand zur Aufnahme von solcher bei einem Bremsvorgang einer Werkzeugmaschine freiwerdenden elektrischen Energie bzw. zur Umwandlung der Bremsenergie in Wärmeenergie, sowie ein Betriebsverfahren für ein System, das eine vorgeschlagene Energieversorgungs-Vorrichtung und eine Werkzeugmaschine umfasst.

### Hintergrund der Erfindung:

Werkzeugmaschinen, wie Bohrhämmer, Winkelschleifer, Kernbohrgeräte oder Ähnliches werden üblicherweise über ein Netzkabel mit elektrischer Energie versorgt. Damit kann den Anforderungen an eine hohe und kontinuierliche Energieverbrauch Rechnung getragen werden, so dass ein Nutzer der Werkzeugmaschine möglichst unterbrechungsfrei mit dem Gerät arbeiten kann. In den letzten Jahren ist allerdings ein Trend zu beobachten, wonach Werkzeugmaschinen unter Verwendung von Batterien oder Akkumulatoren ("Akkus") mit elektrischer Energie versorgt werden. Mit anderen Worten werden von den Herstellern Werkzeugmaschinen auf den Markt gebracht, die akku- oder batteriebetrieben sind. Nutzer versprechen sich davon, dass auf eine Verkabelung des Geräts bzw. die Verbindung des Geräts über ein Netzkabel mit einem Stromnetz verzichtet werden kann. Dies kann sich allerdings auf die mögliche, zur Verfügung stehende Arbeitszeit der Werkzeugmaschine auswirken, insbesondere dann, wenn auf der Baustelle keine Austausch-Batterien oder -Akkus vorhanden sind oder keine Möglichkeit vorhanden ist, die verwendeten Batterien oder Akkus aufzuladen, um sie weiter zu benutzen.

Insbesondere der Einsatz und Betrieb von leistungsstarken Elektro-Werkzeugmaschinen ist aufgrund der verfügbaren Batterien und deren Leistung zeitlich begrenzt. Für Anwendungen mit einem höhen Leistungsbedarf, wie die Durchführung von Kernbohrungen mit einem großen Durchmesser oder für Serienanwendungen kann die benötigte Leistung nicht wirtschaftlich sinnvoll durch die Verwendung von mehreren Batterien oder Ladeintervallen abgedeckt werden.

Um hier Abhilfe zu schaffen, sind im Stand der Technik Netzadapter bekannt, mit denen eine alternative Energieversorgung für batterie- oder akkubetriebene Werkzeugmaschine bereitgestellt werden kann. Für den Betrieb einer Werkzeugmaschine mit einem Netzadapter wäre es wünschenswert, wenn die elektrische Energie, die beispielsweise bei einem Bremsvorgang der Werkzeugmaschine frei wird, nicht verloren ginge oder in Abwärme umgewandelt würde, sondern wenn die Energie aufgefangen und wieder in das System zurückgegeben werden könnte. Bei einem batterie- oder akkubetriebenen Elektrogerät ist dies ohne Weiteres möglich, indem eine solche Bremsenergie in die Batterie oder in den Akku zurückgespeist wird. Dadurch wird die Batterie oder der Akku wieder aufgeladen und die Energie steht später für die Energieversorgung der Werkzeugmaschine zur Verfügung. Bei Betrieb einer Elektro-Werkzeugmaschine mit einem Netzadapter steht lediglich eine vergleichsweise geringe Ausgangskapazität des Netzadapters für die Aufnahme von Energie zur Verfügung. Mit Hilfe dieser Ausgangskapazität des Netzadapters kann aber nur ein kleiner Bruchteil der üblicherweise freiwerdenden Bremsenergie aufgenommen werden, während der größere Anteil der Energie verloren geht. Außerdem kann es zu einem unerwünschten Anstieg der Spannung zwischen dem Adapter und der Werkzeugmaschine kommen. In diesem Fall ist keine weitere Rückspeisung der Energie mehr möglich oder es kann sogar zu Bauteildefekten kommen. Die Fachwelt geht daher davon aus, dass ein Netzadapter ohne weitere Maßnahmen grundsätzlich nicht rückspeisefähig ist. Das bedeutet, dass ein "Auffangen" oder eine Wiederverwendung der freiwerdenden Bremsenergie in der Regel bei der Verwendung eines Netzadapters zur Energieversorgung einer Werkzeugmaschine nicht möglich ist.

Die Aufgabe, die der vorliegenden Erfindung zugrunde liegt, besteht darin, die vorstehend beschriebenen Mängel und Nachteile des Standes der Technik zu überwinden und eine Möglichkeit bereitzustellen, mit der bei Verwendung eines Netzadapters zur Energieversorgung einer Werkzeugmaschine freiwerdende Bremsenergie in das System zurückgegeben bzw. abgeführt werden kann, ohne dass ein Schaden an den Bauteilen eintritt. Ein weiteres Anliegen, das der Erfindung zugrunde liegt, besteht darin, ein System aus einer Werkzeugmaschine und einem Netzadapter anzugeben, bei der eine solche Aufnahme bzw. Abführung von Bremsenergie möglich ist, sowie ein Betriebsverfahren für ein solches System.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist eine Vorrichtung zur Versorgung einer Werkzeugmaschine mit elektrischer Energie vorgesehen, wobei die Vorrichtung einen Lastwiderstand umfasst, der dazu eingerichtet ist, eine Bremsenergie aufzunehmen, die bei einem Bremsvorgang der Werkzeugmaschine frei wird. Mit anderen Worten kann die Vorrichtung einen Lastwiderstand zur Aufnahme von elektrischer Energie umfassen, wobei diese Bremsenergie bei einem Bremsvorgang der Werkzeugmaschine frei wird. Mit dem Lastwiderstand kann insbesondere eine Rückspeisemöglichkeit für elektrische Energie in die Vorrichtung bereitgestellt werden, wenn bei einem Bremsvorgang der Werkzeugmaschine elektrische Energie frei wird. Ein wesentlicher Vorteil der Erfindung besteht darin, dass mit dem Lastwiderstand die Bremsenergie der Werkzeugmaschine in Wärme umgewandelt werden kann. Es ist im Sinne der Erfindung ganz besonders bevorzugt, dass die Bremsenergie durch ein vorzugsweise gezieltes Ansteuern eines Widerstands in abführbare Wärme umgewandelt wird. Vorteilhafterweise wird durch den Lastwiderstand, der im Kontext der vorliegenden Erfindung ansteuerbar ist, eine Energiesenke in Form eines Verbrauchers geschaffen, um die bei dem Bremsvorgang erzeugte überschüssige Energie («Bremsenergie») aufzunehmen bzw. in Wärme umzuwandeln. Es ist im Sinne der Erfindung insbesondere bevorzugt, dass mit dem Lastwiderstand die Bremsenergie aufgenommen und/oder abgeführt werden kann, wobei das Abführen der Bremsenergie insbesondere dadurch erreicht wird, dass die Bremsenergie in Wärme umgewandelt wird. Es ist im Sinne der Erfindung bevorzugt, dass die Wärmeenergie, die bei der Umwandlung der Bremsenergie entsteht, mit Hilfe von Kühlkörpern und/oder Kühlvorrichtungen aus dem Bereich der vorgeschlagenen Vorrichtung abgeführt wird.

Die Vorrichtung kann insbesondere als Netzadapter fungieren und ist vorzugsweise dazu eingerichtet, eine aus einem öffentlichen Energie- oder Stromnetz erhaltenen Wechselspannung in eine Gleichspannung umzuwandeln. Vorzugsweise ist die Gleichspannung, die dabei von der Vorrichtung bzw. dem Netzadapter erzeugt wird, eine Geräte-Gleichspannung, die direkt von der Werkzeugmaschine verwendet werden kann. Es stellt einen wesentlichen Vorteil der Erfindung dar, dass die vorgeschlagene Vorrichtung einen sicheren Schutz vor Überspannungsschädigung bietet.

In einem weiteren Aspekt betrifft die Erfindung ein System, das eine vorgeschlagene Vorrichtung und eine Werkzeugmaschine umfasst, wobei elektrische Energie, die bei einem Bremsvorgang der Werkzeugmaschine frei wird, von einem Lastwiderstand der Vorrichtung aufnehmbar ist. Die Vorsehung des Lastwiderstands als Bestandteil des Netzadapters sorgt vorteilhafterweise dafür, dass der Adapter bzw. das vorgeschlagene System rückspeisefähig werden, d.h. durch die Vorsehung des Lastwiderstands wird es ermöglicht, dass die beim Abbremsen der Werkzeugmaschine freiwerdende elektrische Energie im System gespeichert und später an das System zurückgegeben werden kann. Es kann im Sinne der Erfindung auch bevorzugt sein, die freiwerdende elektrische Energie in Wärmeenergie umzuwandeln. Dadurch wird vorteilhafterweise ein ressourcenschonender Umgang mit Energie, sowie ein kosteneffizienter Betrieb der Werkzeugmaschine mit einem vorgeschlagenen Netzadapter ermöglicht.

Es ist im Sinne der Erfindung bevorzugt, dass der Lastwiderstand in einer Leitungsverbindung zwischen der Werkzeugmaschine und der Vorrichtung angeordnet vorliegt. Mit anderen Worten kann der Lastwiderstand zwischen der Werkzeugmaschine und dem Netzadapter vorliegen, wobei der Lastwiderstand insbesondere als Bestandteil bzw. Komponente des Netzadapters ausgebildet ist.

Es ist im Sinne der Erfindung bevorzugt, dass der Lastwiderstand als Puls Width Modulating Modul (PWM-Modul) oder als binärer Lastwiderstand ausgebildet ist. Es ist im Sinne der Erfindung bevorzugt, dass der Begriff «binärer Lastwiderstand» so zu verstehen ist, dass der Lastwiderstand ein- und ausgeschaltet werden kann. Mithin kann er in zwei voneinander unterscheidbaren Zuständen vorliegen, nämlich eingeschaltet oder ausgeschaltet. Der Lastwiderstand stellt somit vorzugsweise einen ein-/aus-steuerbaren Lastwiderstand dar. Wenn der Lastwiderstand als PWM Modul ausgebildet ist, kann auf diese Weise ein besonders flexibel steuerbarer und einstellbarer Lastwiderstand bereitgestellt werden. Dieser Vorteil der Erfindung wird insbesondere dadurch erreicht, dass durch die PWM-Ansteuerung ein sehr fein einstellbarer Lastwiderstand bereitgestellt werden kann, der darüber hinaus besonders effektiv wirkt, wie Tests gezeigt haben. Es ist im Sinne der Erfindung besonders bevorzugt, dass ein Tastgrad der Ansteuerung des Lastwiderstands in einem Bereich zwischen 0 und 100 % eingestellt werden kann. Synonym zu dem Begriff «Tastgrad» können vorzugsweise auch die Begriffe «Tastverhältnis» oder «Duty Cycle» verwendet werden.

Wenn der Lastwiderstand als binärer Lastwiderstand ausgebildet ist, wird damit vorzugsweise eine An-/Aus-Funktion bereitgestellt, wobei die Zustände «an» und «aus» die zwei unterschiedlichen Zustände der Vorrichtung bzw. des Systems darstellen. Auf diese Weise kann ein Lastwiderstand und eine Möglichkeit zur Aufnahme von elektrischer Energie in einem System aus Werkzeugmaschine und Netzadapter sehr kostengünstig bereitgestellt werden.

Vorzugsweise kann der Lastwiderstand auch als Chopper ausgebildet sein. Der Begriff "Chopper" beschreibt im Sinne der Erfindung bevorzugt eine Ansteuerweise für den Lastwiderstand der vorgeschlagenen Vorrichtung. Gemeint ist damit insbesondere, dass der Lastwiderstand ein- und ausgeschaltet werden kann, was im Sinne der Erfindung als "PWM-Modul" bezeichnet wird. Vorzugsweise kann der Lastwiderstand der vorgeschlagenen Vorrichtung bevorzugt auch als Chopper-Widerstand bezeichnet werden. Tests haben gezeigt, dass der Lastwiderstand auf diese Art besonders fein und flexibel eingestellt werden kann, insbesondere wenn er mit einem beispielsweise als MOSFET ausgebildeten Schalter zusammenwirkt.

Es ist im Sinne der Erfindung bevorzugt, dass der Lastwiderstand in Abhängigkeit von einer Ausgangsspannung der Vorrichtung ansteuerbar ist. Dadurch kann vorteilhafterweise eine Regelung zum Schutz der verwendeten Schaltungs-Bauteile vor einer Überspannung gewährleistet werden. Mit anderen Worten kann mit der entsprechenden Ansteuerung des Lastwiderstands besonders wirksam vermieden werden, dass es zu Beschädigungen an den Komponenten der vorgeschlagenen Vorrichtung aufgrund einer etwaigen Überspannung kommt. Insbesondere können solche Überspannungs-Ereignisse mit der Erfindung besonders wirksam verhindert werden.

Es ist im Sinne der Erfindung bevorzugt, dass Schwellen als Hysterese realisiert sind. Der Begriff «Schwelle» ist im Sinne der Erfindung bevorzugt als Spannungsgrenze zu verstehen. Insbesondere kann durch die Spannungsgrenzen festgelegt werden, wann eine Vernichtung der Bremsenergie beginnt oder beendet wird. Der Begriff «Vernichtung von Bremsenergie» ist im Sinne der Erfindung bevorzugt als Umwandlung der Bremsenergie in Wärmeenergie zu verstehen. Die Festlegung des Starts bzw. des Stopps der Umwandlung der Bremsenergie in Wärmeenergie erfolgt im Sinne der Erfindung bevorzugt im Einklang mit einer Spannungsregelung eines Gleichspannung-Gleichspannung-Konverters (DC-DC-Konverter), der vorzugsweise auch Bestandteil der vorgeschlagenen Vorrichtung sein kann. Diese Spannungsregelung stellt vorzugsweise einen im Hintergrund laufenden Prozess dar.

Es ist im Sinne der Erfindung bevorzugt, dass die Vorrichtung eine Abschalteinrichtung als Überlastschutz umfasst. Der Überlastschutz betrifft insbesondere die Vorrichtung und ihre Komponenten. Mit anderen Worten ist die Abschalteinrichtung dazu eingerichtet, die Vorrichtung und ihre Komponenten vor einer zu hohen Spannung, die bei einem Bremsvorgang der Werkzeugmaschine auftreten kann, wirksam und sicher zu schützen. Es ist im Sinne der Erfindung bevorzugt, dass die Abschalteinrichtung insbesondere den Ausgangskondensator und den Wechselspannungs-Gleichspannungs-Wandler der Vorrichtung vor einer zu hohen Last schützt.

Es ist im Sinne der Erfindung bevorzugt, dass der Begriff «Ausgangskondensator» das Bauteil der vorgeschlagenen Vorrichtung bezeichnet, welches die Kapazität trägt. Synonym zu dem Begriff «Ausgangskondensator» kann daher vorzugsweise auch der Begriff «Ausgangskapazität» verwendet werden. Es ist im Sinne der Erfindung bevorzugt, dass der Ausgangskondensator Bestandteil eines Gleichspannungs-Gleichspannungs-Wandlers der Vorrichtung ist. Es ist im Sinne der Erfindung bevorzugt, dass die Kapazität des Ausgangskondensator entsprechend der gewünschten Funktionalität der Vorrichtung ausgewählt wird.

In einem zweiten Aspekt betrifft die Erfindung ein System, das eine vorgeschlagene Vorrichtung und eine Werkzeugmaschine umfasst, wobei elektrische Energie, die bei einem Bremsvorgang der Werkzeugmaschine frei wird, von einem Lastwiderstand der Vorrichtung aufgenommen werden kann.

In einem weiteren Aspekt betrifft die Erfindung ein Verfahren zum Betrieb eines vorgeschlagenen Systems, das einen Netzadapter und eine Werkzeugmaschine umfasst. Das Betriebsverfahren ist durch folgende Verfahrensschritte gekennzeichnet:
a) Betrieb der Werkzeugmaschine,
b) Abbremsen der Werkzeugmaschine, wodurch elektrische Energie frei wird,
c) Aufnahme der freiwerdenden elektrischen Energie durch einen Lastwiderstand der Vorrichtung des Systems oder Umwandlung der freiwerdenden elektrischen Energie in Wärmeenergie durch den Lastwiderstand.

Vorzugweise kann die Energie durch die Art der Ansteuerung des Lastwiderstands kontrolliert in Wärme umgewandelt werden, was einen großen Vorteil der Erfindung darstellt. Insbesondere wird das System dadurch rückspeisefähig.

In noch einem weiteren Aspekt betrifft die Erfindung eine Verwendung eines Lastwiderstand zur Aufnahme von elektrischer Energie, die bei einem Bremsvorgang der Werkzeugmaschine elektrische Energie frei wird. Es ist im Sinne der Erfindung insbesondere bevorzugt, dass der Lastwiderstand zur Umwandlung der freiwerdenden Bremsenergie in Wärmeenergie verwendet wird. Die für die Vorrichtung eingeführten Begriffe, Definitionen und technischen Vorteile gelten für das System, das Betriebsverfahren und die Verwendung des Lastwiderstands analog.

Es ist im Sinne der Erfindung bevorzugt, dass der Netzadapter zwei Bauteile umfasst, wobei das erste Bauteil als PFC-Bauteil bezeichnet werden kann, da es vorzugsweise ein PFC (Power Factor Correction) umfasst bzw. dazu eingerichtet ist, eine Power Factor Correction-Funktion auszuüben. Das zweite Bauteil der vorgeschlagenen Vorrichtung kann insbesondere als DC-DC-Wandler ausgebildet sein. Es kann sich insbesondere um einen Gleichspannungs-Gleichspannungs-Wandler handeln, wobei Gleichspannung im Sinne der Erfindung mit der üblichen Abkürzung DC und Wechselspannung mit der üblichen Abkürzung AC bezeichnet wird. Vorteilhafterweise ermöglicht die Vorrichtung in ihrer Gesamtheit eine Umwandlung von einer Wechselspannung in eine Geräte-Gleichspannung, so dass die aus einem öffentlichen Energienetz erhältlich Wechselspannung (AC) in einer Geräte-Gleichspannung umgewandelt werden kann. Dadurch wird es mit der Erfindung vorteilhafterweise ermöglicht, dass diese Geräte-Gleichspannung einfach und direkt von der Werkzeugmaschine als Verbraucher umgesetzt werden kann. Der Begriff «Geräte-Gleichspannung» ist im Sinne der Erfindung so zu verstehen, dass dies die für den Betrieb der Werkzeugmaschine bzw. des Werkzeuggeräts erforderliche Betriebsspannung ist. Diese Geräte-Gleichspannung wird vorteilhafterweise von der vorgeschlagenen Vorrichtung an die Werkzeugmaschine abgegeben, wobei die Geräte-Gleichspannung vorteilhafterweise durch einen AC-DC- Umwandlungsprozess durch das erste Bauteil und einen DC-DC-Umwandlungsprozess durch das zweite Bauteil der Vorrichtung erhalten wird. Mit anderen Worten wandelt das zweite Bauteil insbesondere diejenige Gleichspannung in eine Geräte-Gleichspannung um, die zuvor von dem ersten Bauteil durch einen Umwandlungsprozess aus der von dem Energienetz erhaltenen Wechselspannung erzeugt wurde.

Die Vorrichtung erfüllt vorzugsweise die Funktion eines Netzadapters, mit dem eine Werkzeugmaschine, die insbesondere auch batterie- oder akkubetrieben ausgebildet ist, mit elektrischer Energie versorgt werden kann. Mit anderen Worten kann die Erfindung eine alternative Energieversorgungsmöglichkeit für eine Werkzeugmaschine darstellen, die vorzugsweise zum Einsatz kommen kann, wenn eine Energieversorgung mit einer Batterie oder einem Akku nicht in Frage kommt. Das kann beispielsweise dann der Fall sein, wenn die mitgeführten Batterien oder Akkus leer sind oder aus anderen nicht zur Energieversorgung bereitstehen. Mit der Erfindung kann insbesondere ein AC-DC-Netzadapter für eine Werkzeugmaschine bereitgestellt werden, mit dem die Werkzeugmaschine beispielsweise über ein öffentliches Energienetz mit elektrischer Energie versorgt werden kann, wobei die vorgeschlagene Vorrichtung insbesondere dazu eingerichtet ist, die vom Energienetz bereitgestellte Wechselspannung in einer Geräte-Gleichspannung umzuwandeln, welche für den Betrieb der Werkzeugmaschine erforderlich ist. Es ist im Sinne der Erfindung insbesondere bevorzugt, dass die Vorrichtung dazu eingerichtet ist, die Werkzeugmaschine mit einem Energienetz zu verbinden. Dazu können Netzstecker und Netzkabel verwendet werden.

Es ist im Sinne der Erfindung bevorzugt, dass die vorgeschlagene Vorrichtung über die vorhandene Batterie- oder Akkuschnittstelle der Werkzeugmaschine mit der Werkzeugmaschine verbunden werden kann.

In einer alternativen, zweiten Ausgestaltung der Erfindung kann die Vorrichtung ein Gehäuse umfassen, wobei das Gehäuse dazu eingerichtet ist, die Bauteile und Komponenten des Netzadapters aufzunehmen. Es ist im Sinne der Erfindung bevorzugt, dass das Gehäuse Abmessungen aufweist, die ähnlich sind zu den Abmessungen einer Batterie oder eines Akkus, die alternativ zur Energieversorgung der Werkzeugmaschine verwendet werden können. Dadurch ergibt sich eine gute Austauschbarkeit der Energieversorgungsmittel und der Nutzer der Werkzeugmaschine kann besonders einfach und komfortabel von einem Batterie- oder Akkubetrieb der Werkzeugmaschine in einen Netzadapter-Betrieb unter Verwendung der vorgeschlagenen Vorrichtung wechseln.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In der Figur sind gleiche und gleichartige Komponenten mit gleichen Bezugszeichen beziffert. Es zeigen:
- Fig. 1: Ansicht einer bevorzugten Ausgestaltung der Vorrichtung mit Lastwiderstand
- Fig. 2: Ansicht einer bevorzugten Ausgestaltung der Vorrichtung mit Lastwiderstand und Abschalteinrichtung

### Ausführungsbeispiele und Figurenbeschreibung:

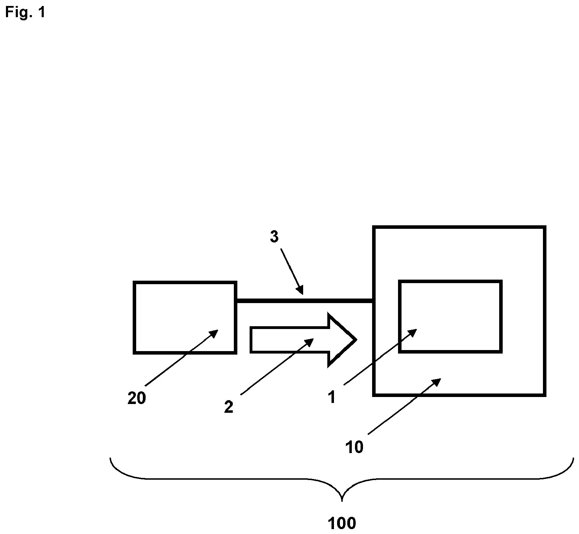

Figur 1 zeigt eine erste bevorzugte Ausgestaltung der vorgeschlagenen Vorrichtung 10 mit Lastwiderstand 1, sowie eine beispielhafte Werkzeugmaschine 20. Mit der Vorrichtung 10 ist es insbesondere möglich, eine eingehende Wechselspannung in eine Gleichspannung umzuwandeln, wobei die abgegebene Gleichspannung insbesondere eine Geräte-Gleichspannung ist, die zur Energieversorgung einer Werkzeugmaschine 20 verwendet werden kann. Die Vorrichtung 10 umfasst darüber hinaus einen Lastwiderstand 1, wobei die Werkzeugmaschine 20 und die Vorrichtung 10 über eine Leitungsverbindung 3 miteinander verbunden sind. Die Leitungsverbindung 3 kann im Sinne der Erfindung insbesondere auch als elektrische Verbindung bezeichnet werden. Es ist im Sinne der Erfindung bevorzugt, dass der Lastwiderstand 1 in der elektrischen Verbindung 3 angeordnet ist. Bei einem Bremsvorgang der Werkzeugmaschine 20 kann Energie, insbesondere Bremsenergie 2, freiwerden. Diese Bremsenergie 2 kann von dem Lastwiderstand 1 der Vorrichtung 10 aufgenommen und später an die Werkzeugmaschine 20 - zum Beispiel zu deren Antrieb - zurückgegeben werden. In der Vorrichtung 10 können ferner ein Wechselspannungs-Gleichspannungs-Wandler (AC-DC-Wandler), sowie ein Ausgangskondensator (beide: nicht dargestellt) angeordnet vorliegen, wobei der Ausgangskondensator in der Leitung innerhalb der Vorrichtung 10 im Wesentlichen parallel zum Lastwiderstand 1 am Ausgang des AC-DC-Wandlers angeordnet vorliegt. Im Anschluß an den AC-DC-Wandler kann die Leitung innerhalb der Vorrichtung 10 in ein Netzkabel und einen Netzstecker übergehen, mit denen die Vorrichtung 10 an einem bevorzugt öffentlichen Strom- bzw. Energiemetz angeschlossen werden kann. In dem in Fig. 1 dargestellten Beispiel der Erfindung kann der Lastwiderstand 1 schaltbar ausgebildet sein, so dass er im Kontext der vorliegenden Erfindung als «Chopper» bezeichnet wird. Im Sinne der Erfindung ist es also möglich, dass der Lastwiderstand binär (ein/aus) oder PWM-gesteuert ausgebildet ist. Die Vorrichtung 10 und die Werkzeugmaschine 20 bilden ein System 100, in dem die Vorrichtung 10 als Netzadapter und zur Versorgung der Werkzeugmaschine 20 mit elektrischer Energie verwendet werden kann.

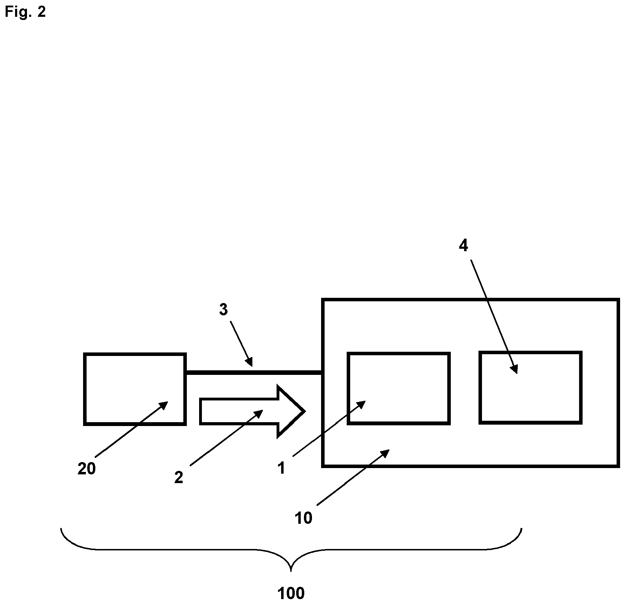

Figur 2 zeigt eine zweite bevorzugte Ausgestaltung der vorgeschlagenen Vorrichtung 10 mit Lastwiderstand 1 und Abschalteinrichtung 4. Bei dem in Fig. 2 dargestellten Beispiel der Erfindung liegt die Abschalteinrichtung 4 zwischen dem Lastwiderstand 1 und dem Ausgangskondensator angeordnet vor, so dass innerhalb der elektrischen Leitung innerhalb der Vorrichtung 10 der Lastwiderstand, die Abschalteinrichtung 4, der Ausgangskondensator und der AC-DC-Wandler in dieser Reihenfolge angeordnet vorliegen. Die Bremsenergie 2, die beim Abbremsen der Werkzeugmaschine 20 frei wird, wird auch in Fig. 2 mit einem Pfeil dargestellt. Die Pfeilrichtung soll andeuten, dass die freiwerdende Bremsenergie 2 von der Werkzeugmaschine 20 in

Richtung des Netzadapters 1 transportiert werden kann, wo sie insbesondere in Wärmeenergie umgewandelt werden kann. Die Werkzeugmaschine 20 und der Netzadapter 10 sind vorzugsweise über eine elektrische Verbindung 3 miteinander verbunden, in der der Lastwiderstand 1 angeordnet vorliegen kann.

### Bezugszeichenliste

- 1: Lastwiderstand
- 2: Bremsenergie
- 3: elektrische Verbindung zwischen Werkzeugmaschine und Vorrichtung
- 4: Abschalteinrichtung als Überlastschutz
- 10: Vorrichtung
- 20: Werkzeugmaschine
- 100: System

## Patentansprüche

1. Vorrichtung (10) zur Versorgung einer Werkzeugmaschine (20) mit elektrischer Energie
**dadurch gekennzeichnet, dass**
die Vorrichtung (10) einen Lastwiderstand (1) umfasst, wobei der Lastwiderstand (1) dazu eingerichtet ist, eine Bremsenergie (2) aufzunehmen, die bei einem Bremsvorgang der Werkzeugmaschine (20) frei wird.

2. Vorrichtung (10) nach Anspruch 1
**dadurch gekennzeichnet, dass**
der Lastwiderstand (1) an einer elektrischen Verbindung (3) in der Vorrichtung (10) angeordnet vorliegt.

3. Vorrichtung (10) nach Anspruch 1 oder 2
**dadurch gekennzeichnet, dass**
der Lastwiderstand (1) als Puls Width Modulating Modul oder als binärer Lastwiderstand ausgebildet ist.

4. Vorrichtung (10) nach Anspruch 1 oder 2
**dadurch gekennzeichnet, dass**
der Lastwiderstand (1) als Chopper ausgebildet ist.

5. Vorrichtung (10) nach einem der vorhergehenden Ansprüche
**dadurch gekennzeichnet, dass**
der Lastwiderstand (1) in Abhängigkeit von einer Ausgangsspannung der Vorrichtung (10) ansteuerbar ist.

6. Vorrichtung (10) nach einem der vorhergehenden Ansprüche
**dadurch gekennzeichnet, dass**
Spannungsgrenzen als Hysterese realisiert sind.

7. Vorrichtung (10) nach einem der vorhergehenden Ansprüche
**dadurch gekennzeichnet, dass**
die Vorrichtung (10) eine Abschalteinrichtung (4) als Überlastschutz umfasst.

8. System (100) umfassend eine Vorrichtung (10) nach einem der vorhergehenden Ansprüche und eine Werkzeugmaschine (20), wobei elektrische Energie (2), die bei einem Bremsvorgang der Werkzeugmaschine (20) frei wird, von einem Lastwiderstand (1) der Vorrichtung (10) aufnehmbar ist.

9. Verfahren zum Betrieb eines Systems (100) nach Anspruch 8,
**gekennzeichnet durch die folgenden Verfahrensschritte**
a) Betrieb der Werkzeugmaschine (20),
b) Abbremsen der Werkzeugmaschine (20), wodurch elektrische Energie (2) frei wird,
c) Aufnahme der freiwerdenden elektrischen Energie (2) durch einen Lastwiderstand (1) der Vorrichtung (10) des Systems (100) oder Umwandlung der freiwerdenden elektrischen Energie (2) im Wärmeenergie durch den Lastwiderstand (1).

10. Verwendung eines Lastwiderstand (1) zur Aufnahme von elektrischer Energie (2), die bei einem Bremsvorgang der Werkzeugmaschine (20) frei wird.
